# EUROPÄISCHE PATENTSCHRIFT

(11) **EP 0 427 063 B1**
(45) Veröffentlichungstag und Bekanntmachung des Hinweises auf die Patenterteilung: **19.01.1994**
(21) Anmeldenummer: 90120557.5
(22) Anmeldetag: 26.10.1990
(51) Int. Cl.: E04C 2/04, C04B 28/14

(54) **Gipsbauplatte mit Kaschierungen aus beschichteten Glasfaservliesen und Verfahren zur Herstellung derselben**
Gypsum board with face sheets of covered glass fibre and method of manufacturing the same
Panneau en plâtre avec feuilles de revêtement en fibre de verre revêtu, et procédé de fabrication

(30) Priorität: 10.11.1989 DE 3937433
(43) Veröffentlichungstag der Anmeldung: 15.05.1991
(73) Patentinhaber: Gebr. Knauf Westdeutsche Gipswerke KG, D-97343 Iphofen (DE)
(72) Erfinder: Seth, Harro, W-8715 Iphofen (DE); Neuhauser, Gerhard, Dr., D-8710 Kitzingen (DE); Berneth, Claus-Peter, Dr., W-8713 Marktbreit (DE)
(74) Vertreter: Werner, Hans-Karsten, Dr.Dipl.-Chem.

(56) Entgegenhaltungen:
- FR-A- 2 547 533
- GB-A- 2 022 503
- US-A- 4 494 990

## Beschreibung

Gegenstand der vorliegenden Erfindung ist eine Gipsbauplatte, bestehend aus einem Gipskern mit einseitigen oder beidseitigen Kaschierungen aus beschichteten Glasfaservliesen, sowie ein Verfahren zur Herstellung derselben.

Gipsbauplatten mit Kaschierungen aus Glasfaservliesen sind nichtbrennbar und können daher auch im Innenausbau verwendet werden, wo es zweckmäßig oder vorgeschrieben ist, nichtbrennbare Baustoffe einzusetzen. Mit Glasfaservliesen kaschierte Gipsbauplatten haben sich bereits bewährt. Der Nachteil dieser Platten besteht jedoch darin, daß es bei der Verarbeitung der Platten zu einem Glasfaserabrieb kommen kann, was vor allem beim Arbeiten über Kopf unangenehm sein kann. Dieser Abrieb kann vermieden werden, wenn die Außenseite des Glasfaservlieses mit Papier beschichtet ist, welches üblicher Weise mit einem Kunstharzbindemittel aufgeklebt wird. Solche Gipsbauplatten können auf einer üblichen, der Gipskartonplattenfertigung dienenden Bandstraße hergestellt werden. Wegen der Papierbeschichtung sind diese Gipsbauplatten jedoch weder als Baustoff der Klasse Al - DIN 4102 (nichtbrennbar) noch als nicht brennbar (non-combustible) nach ISO-IS 1182-1979 eingestuft. Bei der Prüfung im Ofen bei 750 °C treten Entflammungen auf. Solche Platten besitzen weiterhin eine relativ geringe Luft- bzw. Dampfdurchlässigkeit.

Aus der DE-A-35 08 933 sind nichtbrennbare Gipsbauplatten mit Glasfaserlage bekannt, bei der auf der Außenseite der Glasfaserlage gleichmäßig verteilt ein feinkörniger anorganischer Stoff ist, der sich bei Hitzeeinwirkung unter Energieverbrauch ändert. Als anorganische Stoffe werden insbesondere Gips (Calciumsulfat-Dihydrat), Kalkstein, Dolomit oder Magnesit genannt sowie unter Hitzeeinwirkung expandierende Substanzen, wie Vermiculite und Perlite. Ein Nachteil dieser nichtbrennbaren Gipsbauplatten ist, daß diese zusätzliche Beschichtung mit dem feinkörnigen anorganischen Material nur unter Zuhilfenahme eines organischen Kunstharzbindemittels, wie einer Kunstharzdispersion, erfolgen kann. Diese Kunstharzbindemittel müssen zunächst auf das Glasfaservlies aufgebracht werden, dann muß mit dem anorganischen Material beschichtet und verklebt werden. Erst nach vollständigem Abbinden des Bindemittels kann das Glasvlies mit der Beschichtung aufgerollt und zur Bandstraße für Gipsbauplatten transportiert werden.

GB-A-2022503 beschreibt die Herstellung von glasfaserverstärkten und abbindefähigen Schichten, die hergestellt werden durch Vermischen von verstärkenden Fasern, wie Glasfasern und einem abbindenden, mineralischen Material in feiner Form wie Calciumsulfat-Halbhydrat.

Die Erfindung hat sich somit die Aufgabe gestellt, eine nichtbrennbare Gipsbauplatte bestehend aus einem Gipskern mit einseitigen oder beidseitigen Kaschierungen aus beschichteten Glasfaservliesen zu entwickeln, welche leicht und einfach herstellbar ist und alle Anforderungen an eine derartige Platte aufweist. Dies sind insbesondere kein Glasfaserabrieb, gute Beschichtbarkeit, Nichtbrennbarkeit und im Vergleich zu Gipskartonplatten geringere Empfindlichkeit gegen Feuchtigkeit.

Diese Aufgabe kann überraschend einfach dadurch gelöst werden, daß nur die dem Gipskern abgewandten Seiten der Glasfaservliese beschichtet sind mit einem zumindest teilweise mit Wasser abgebundenem Zement oder Zementgemisch.

Als mit Wasser abbindende anorganische Binder kommen vor allem schnellbindender Zement oder ein schnellbindendes Zementgemisch in Frage. Im einfachsten Fall können schnellbindende α-Halbhydrate oder β-Halbhydrate oder Gemische derselben eingesetzt werden.

Weiterhin kann auch Zement nach DIN 1164 verwendet werden, nämlich Portland-Zement, Eisenportland-Zement, Hochofen-Zement, Traß-Zement in reiner Form oder in Mischung. Wegen der unmittelbaren Nachbarschaft dieser Zementschicht mit Calciumsulfat in der Gipsbauplatte empfiehlt es sich jedoch, hochsulfatbeständigen Zement zu verwenden. Zu diesen hochsulfatbeständigen Zementen zählen vor allem Flugasche-Zement sowie schnell abbindende Zemente aus 70 - 90 % Portland-Zement und 10 - 30 % Tonerde-Schmelz-Zement. Besonders geeignet sind schnellabbindende Zemente und schnell abbindende Zementgemische, welche zuvor im trockenen Zustand bestanden haben aus mindestens 37 Gew. -% eines Zements, bis zu 60 Gew.-% α-Halbhydrat und 3 - 10 Gew.-% feinteiliger Kieselsäure sowie gewünschtenfalls bis zu 2 Gew. -% Verflüssiger, Verzögerer und/oder Beschleuniger.

Optimale Ergebnisse werden erzielt bei Verwendung eines Gemisches aus 40 - 60 Gewichtsteilen aluminatarmen Zement (3 % C₃A nach DIN 1164), 40 - 60 Gewichtsteilen α-Halbhydrat aus Rauchgasgips und 3 - 10 Gewichtsteilen reaktivem SiO₂ sowie gewünschtenfalls bis zu 2 Gew.-% Verflüssiger, Verzögerer und/oder Beschleuniger. Dieses schnell abbindende Gemisch ist hochsulfatbeständig, und ist sowohl beim Abbinden wie während des Alterungsprozesses über lange Zeit formbeständig. Während reine Zementmischungen dazu neigen, beim Abbinden zu schrumpfen und Gips dazu neigt, sich beim Abbinden auszudehnen, sind die bevorzugten Gemische beim Abbinden dimensionsstabil. Im Gegensatz zu bekannten Mischungen aus Zement und Gips sind die erfindungsgemäßen Gemische durch den Zusatz von feinteiliger Kieselsäure auch bei langfristiger Beanspruchung durch Temperatur und Feuchtigkeit dimensionsstabil, da sie nicht zur nachträglichen Bildung von Ettringit neigen. Die bevorzugten Zementgemische sind Gegenstand der Patentanmeldung P 39 37 432.7 (KW-35) vom gleichen Tage.

Der Zement oder das Zementgemisch werden mit Wasser angerührt und auf das Glasfaservlies aufgetragen. Dabei ist es möglich, aber im allgemeinen nicht nötig, zusätzlich ein organisches Kunstharzbindemittel zuzugeben. Durch den Zusatz von organischen Kunstharzbindemitteln kann die Ersthaftung beschleunigt werden. Die Endhaftung bewirkt jedoch stets in überwiegendem Maße der Zement oder das Zementgemisch. Die so beschichteten Glasfaservliese können kurze Zeit später getrocknet, aufgerollt, transportiert und zur Herstellung von erfindungsgemäßen Gipsbauplatten verwendet werden. Sofern der Abbindeprozeß auf dem aufgerollten Glasfaservlies unvollständig war, kann eine weitere Abbindung während der Herstellung der Gipsbauplatte stattfinden. Selbst wenn dann noch der Abbindeprozeß des Zements oder Zementgemisches nicht zum Abschluß gekommen ist, erfolgt dieser spätestens bei einer Belastung der fertigen Gipsbauplatte durch Feuchtigkeit. Insbesondere bei den bevorzugten Gemischen aus Zement mit α-Halbhydrat aus Rauchgasgips hat sich gezeigt, daß der Abbindeprozeß zumindest so schnell erfolgt, daß die fertig hergestellte Gipsbauplatte hervorragende Eigenschaften aufweist. Auch bei einer späteren vollständigen Abbindung des Zementgemisches bei Belastung durch Feuchtigkeit kommt es weder zu Volumenänderungen, Ausblühungen, Rissen oder Verschlechterungen der mechanischen Eigenschaften. Ein deutliches Kriterium für die Belastbarkeit von derartigen Gipsbauplatten ist das Durchhängen von horizontal aufgehängten Platten in Feuchträumen. Es hat sich gezeigt, daß die erfindungsgemäßen Gipsbauplatten wesentlich bessere Eigenschaften aufweisen als alle bisher bekannten Gipsbauplatten.

Dazu wurde folgender Test durchgeführt:

Probekörper (700 mm lang, 100 mm breit) von 12,5 mm Gipskarton-Bauplatten (gypsum wallboard) und 12,5 mm Platten nach dieser Erfindung wurden nach Trocknung bei 40°C in einer Klimakammer bei 20°C/90 % relativer Luftfeuchtigkeit 7 Tage lang auf 600 mm voneinander entfernten Auflagern gelagert. Danach wurde der Durchhang bestimmt. Dieser betrug bei der Gipskartonplatte 4 bis 5,5 mm und bei der erfindungsgemäßen Platte 1 bis 1,5 mm.

Auch die übrigen Testungen der erfindungsgemäßen Gipsbauplatten haben gezeigt, daß sie allen Anforderungen genügen. Es ist sogar möglich, auf die bisher notwendige vollflächige Verspachtelung zu verzichten und die Oberfläche direkt endgültig zu beschichten, beispielsweise mit Dispersionsfarben, Tapeten oder durch Verklebung mit Fliesen und Platten.

Die Herstellung der erfindungsgemäßen Gipsbauplatten erfolgt dadurch, daß zunächst die Glasfaservliese einseitig mit Zement oder einem Zementgemisch und Wasser beschichtet, nach mindestens teilweisem Abbinden und Trocknen der Beschichtung aufgerollt und danach mit der nicht beschichteten Seite mit einem abbindefähigen pastösen Gemisch aus Gips und Wasser so in Berührung gebracht werden, daß dieses Gemisch nur teilweise in das Glasfaservlies eindringt und dabei nach dem Abbinden des Gipses ein mit dem beschichteten Glasfaservlies kaschierte Gipsbauplatte entsteht.

Selbstverständlich ist es möglich, die Kaschierung einseitig oder beidseitig vorzunehmen. Vorzugsweise werden erfindungsgemäße Gipsbauplatten hergestellt und verwendet, die beidseitig kaschiert sind.

Die erfindungsgemäßen Gipsbauplatten können, genau wie die bisher bekannten Gipsbauplatten, in verschiedenen Stärken hergestellt werden. Die Kaschierung erfolgt im allgemeinen mit einem Basisvlies, welches ein Gewicht von 100 - 140 g/m² aufweist. Die Beschichtung mit Zement oder einem Zementgemisch erfolgt so, daß sich dadurch das Gewicht der beschichteten Kaschierung auf 200 - 350 g/m² erhöht. Es hat sich gezeigt, daß insbesondere mit den bevorzugten Gemischen aus sulfatbeständigem Zement, α-Halbhydrat und reaktivem SiO₂ niedrigere Gewichte pro Fläche ermöglicht und dennoch ausgezeichnete Ergebnisse erzielt werden.

## Patentansprüche

1. Gipsbauplatte bestehend aus einem Gipskern mit einseitigen oder beidseitigen Kaschierungen aus beschichteten Glasfaservliesen, dadurch gekennzeichnet, daß nur die dem Gipskern abgewandten Seiten der Glasfaservliese beschichtet sind mit einem zumindest teilweise mit Wasser abgebundenem Zement oder Zementgemisch.

2. Gipsbauplatte gemäß Anspruch 1, dadurch gekennzeichnet, daß ein schnellbindender Zement oder ein schnellbindendes Zementgemisch verwendet wird.

3. Gipsbauplatte gemäß Anspruch 1 oder 2, dadurch gekennzeichnet, daß ein hochsulfatbeständiger Zement verwendet wird.

4. Gipsbauplatte gemäß einem der Ansprüche 1 oder 2, dadurch gekennzeichnet, daß das Zementgemisch im trockenen Zustand bestanden hat aus mindestens 37 Gew.-% eines Zements, bis zu 60 Gew.-% α-Halbhydrat und 3 bis 10 Gew.-% feinteiliger Kieselsäure sowie gewünschtenfalls bis zu 2 Gew.-% Verflüssiger, Verzögerer und/oder Beschleuniger.

5. Gipsbauplatte gemäß Anspruch 4, dadurch gekennzeichnet, daß ein Gemisch verwendet wird aus 40 bis 60 Gewichtsteilen aluminatarmen Zement ( 3 % C₃A nach DIN 1164), 40 bis 60 Gewichtsteilen α-Halbhydrat aus Rauchgasgips und 3 bis 10 Gewichtsteilen reaktivem SiO₂ sowie gewunschtenfalls bis zu 2 Gew.-% Verflüssiger, Verzögerer und/oder Beschleuniger.

6. Verfahren zur Herstellung von Gipsbauplatten gemäß Ansprüchen 1 bis 5, dadurch gekennzeichnet, daß zunächst Glasfaservliese einseitig mit Zement oder einem Zementgemisch und Wasser beschichtet, nach mindestens teilweisem Abbinden aufgerollt und danach mit der nicht beschichteten Seite mit einem abbindefähigen pastösen Gemisch aus Gips und Wasser so in Berührung gebracht werden, daß dieses Gemisch nur teilweise in das Glasfaservlies eindringt und dabei nach dem Abbinden des Gipses ein mit dem beschichteten Glasfaservlies kaschierte Gipsbauplatte entsteht.

7. Verfahren gemäß Anspruch 6, dadurch gekennzeichnet, daß zur Beschleunigung der Ersthaftung dem Wasser zusätzlich ein organisches Kunstharzbindemittel zugesetzt wird.

## Claims

1. A plaster building board comprising a gypsum core with one-sided or double-sided linings of coated glass fiber non-woven fabrics, characterized in that merely the surfaces turned away from the gypsum core of the glass fiber non-woven fabrics have been coated with cement or a cement mixture which has at least partially set with water.

2. A plaster building board according to claim 1, characterized in that a quick-setting cement or cement mixture are used.

3. A plaster building board according to claims 1 or 2, characterized in that a highly sulfate-resistant cement is used.

4. A plaster building board according to anyone of claims 1 to 2, characterized in that the cement mixture previously, in the dry state, consisted of at least 37% by weight of a cement, up to 60 % by weight of α-hemihydrate and 3-10% by weight of finely divided silica plus, if desired, up to 2% by weight of liquefier/plasticizer, retardant and/or accelerator.

5. A plaster building board according to claim 4, characterized in that a mixture is used which comprises 40 to 60 parts by weight of low-aluminate cement (3% of C₃A according to DIN 1164), 40 to 60 parts by weight of α-hemihydrate from flue gas gypsum and 3 to 10 parts by weight of reactive SiO₂, plus, if desired, up to 2% by weight of liquefier/plasticizer, retardant and/or accelerator.

6. A process for manufacturing the plaster building boards according to claims 1 to 5, characterized in that first glass fiber non-woven fabrics are coated on one surface with cement or a cement mixture and water; the resulting fabrics, after setting has at least partially taken place, are wound up, and then the un-coated surface thereof is contacted with a settable pasty mixture comprising gypsum and water so that this mixture will only partially infiltrate the glass fiber non-woven fabric, whereupon, after the gypsum has set, a plaster building board has been formed which has been lined with the glass fiber non-woven fabric thus coated.

7. A process according to claim 6, characterized in that an organic synthetic resin binder is further added to the water in order to accelerate the initial adhesion.

## Revendications

1. Panneau de plâtre formé d'une âme en plâtre avec, sur une ou deux faces, des revêtements, en non-tissé de fibres de verre, caractérisé en ce que seulement les faces du non-tissé de fibres de verre opposées à l'âme en plâtre sont revêtues d'un ciment ou d'un mélange de ciments pris au moins en partie avec de l'eau.

2. Panneau de plâtre selon la revendication 1, caractérisé en ce qu'on utilise un ciment à prise rapide ou un mélange de ciments à prise rapide.

3. Panneau de plâtre selon la revendication 1 ou 2, caractérisé en ce qu'on utilise un ciment très résistant au sulfate.

4. Panneau de plâtre selon la revendication 1 ou 2, caractérisé en ce que le mélange de ciments à l'état sec est constitué d'au moins 37 % en poids d'un ciment, jusqu'à 60 % en poids d'un semi-hydrate alpha et de 3 à 10 % en poids d'acide silicique finement divisé, ainsi que, si on le souhaite, jusqu'à 2 % en poids de fluidifiant, de retardateur et/ou d'accélérateur.

5. Panneau de plâtre selon la revendication 4, caractérisé en ce qu'on utilise un mélange de 40 à 60 parties en poids de ciment à faible teneur en aluminate (3 % C₃A selon DIN 1164), 40 à 60 parties en poids de semi-hydrate alpha de gypse de désulfuration des gaz de fumée et 3 à 10 parties en poids de SiO₂ réactif, ainsi que, si on le souhaite, jusqu'à 2 % en poids de fluidifiant, de retardateur et/ou d'accélérateur.

6. Procédé de fabrication de panneaux de plâtre selon les revendications 1 à 5, caractérisé en ce qu'on recouvre d'abord des non-tissés de fibres de verre, sur une face, avec du ciment ou un mélange de ciments et de l'eau, on les enroule après la prise au moins partielle et, ensuite, par leur face non revêtue, on les amène au contact d'un mélange pâteux durcissable de gypse et d'eau de manière telle que ce mélange ne pénètre que partiellement dans le non-tissé de fibres de verre, un panneau de plâtre revêtu du non-tissé de fibres de verre enduit étant ainsi formé, après la prise du gypse.

7. Procédé selon la revendication 6, caractérisé en ce qu'on ajoute, en outre, un liant organique à base de résine synthétique, à l'eau, pour l'accélération de l'adhérence initiale.
